# EUROPÄISCHE PATENTSCHRIFT

(11) **EP 3 268 243 B1**
(45) Veröffentlichungstag und Bekanntmachung des Hinweises auf die Patenterteilung: **05.04.2023**
(21) Anmeldenummer: 16705773.6
(22) Anmeldetag: 19.02.2016
(51) Int. Cl.: B60L 50/51, B60L 58/21, H02M 3/158, H02J 7/34, H02M 1/00

(54) **LEISTUNGSPUFFER FÜR EIN BATTERIESYSTEM ZUM BETREIBEN EINER ELEKTRISCHEN MASCHINE UND VERFAHREN ZUM EINSTELLEN EINER MITTELS EINES BATTERIESYSTEMS ZUM BETREIBEN EINER ELEKTRISCHEN MASCHINE BEREITSTELLBAREN ELEKTRISCHEN LEISTUNG**
POWER BUFFER FOR A BATTERY SYSTEM FOR OPERATING AN ELECTRICAL MACHINE AND METHOD FOR ADJUSTING AN ELECTRICAL OUTPUT WHICH CAN BE PROVIDED BY MEANS OF A BATTERY SYSTEM FOR OPERATING AN ELECTRICAL MACHINE
TAMPON DE PUISSANCE POUR UN SYSTÈME DE BATTERIE POUR FAIRE FONCTIONNER UN MOTEUR ÉLECTRIQUE ET PROCÉDÉ DE RÉGLAGE D'UNE PUISSANCE ÉLECTRIQUE PRODUITE PAR UN SYSTÈME DE BATTERIE POUR FAIRE FONCTIONNER UN MOTEUR ÉLECTRIQUE

(30) Priorität: 12.03.2015 DE 102015204491
(43) Veröffentlichungstag der Anmeldung: 17.01.2018
(73) Patentinhaber: Robert Bosch GmbH, 70442 Stuttgart (DE)
(72) Erfinder: BAUCKHAGE, Peter, 74360 Ilsfeld (DE); GLEITER, Andreas, 70437 Stuttgart (DE)
(86) Internationale Anmeldenummer: PCT/EP2016/053496
(87) Internationale Veröffentlichungsnummer: WO 2016/142145

(56) Entgegenhaltungen:
- EP-A1- 2 193 954
- WO-A1-2009/157485
- US-A- 5 710 699
- US-A1- 2003 043 597
- CANDIDO D B ET AL: "Implementation of a stand-alone photovoltaic system based on decentralized dc-dc converters", POWER ELECTRONICS CONFERENCE, 2009. COBEP '09. BRAZILIAN, IEEE, PISCATAWAY, NJ, USA, 27 September 2009 (2009-09-27), pages 174-180, XP031576049, ISBN: 978-1-4244-3369-8
- ZHENHUA JIANG ET AL: "A novel, digitally-controlled, portable photovoltaic power source", APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, vol. 3, 6 March 2005 (2005-03-06), pages 1797-1802Vol.3, XP010809498, DOI: 10.1109/APEC.2005.1453291 ISBN: 978-0-7803-8975-5
- TSENG K C ET AL: "High frequency positive/negative pulse charger with power factor correction", POWER ELECTRONICS SPECIALISTS CONFERENCE; [ANNUAL POWER ELECTRONICS SPECIALISTS CONFERENCE],, vol. 2, 23 June 2002 (2002-06-23), pages 671-675, XP010747458, DOI: 10.1109/PSEC.2002.1022530 ISBN: 978-0-7803-7262-7
- ONAR O C ET AL: "A Novel Integrated Magnetic Structure Based DC/DC Converter for Hybrid Battery/Ultracapacitor Energy Storage Systems", IEEE TRANSACTIONS ON SMART GRID, IEEE, USA, vol. 3, no. 1, 1 March 2012 (2012-03-01), pages 296-307, XP011422554, ISSN: 1949-3053, DOI: 10.1109/TSG.2011.2150250

## Beschreibung

Die vorliegende Erfindung betrifft ein Leistungspuffer und Verbindungselement nach dem Anspruch 1 für ein Batteriesystem eines Fahrzeugs zum Betreiben einer elektrischen Maschine, wobei das Batteriesystem eine Batterie aufweist. Ferner betrifft die Erfindung ein Verfahren nach dem Anspruch 6 zum Einstellen einer mittels eines Batteriesystems eines Fahrzeugs zum Betreiben einer elektrischen Maschine bereitstellbaren elektrischen Leistung, wobei das Batteriesystem eine Batterie aufweist. Auch betrifft die Erfindung ein Fahrzeug mit einer elektrischen Maschine und einem Batteriesystem zum Betreiben der elektrischen Maschine, wobei das Batteriesystem eine Batterie und einen wie zuvor genannten Leistungspuffer umfasst.

### Stand der Technik

Beim Einsatz einer aus mehreren Batteriezellen ausgebildeten Batterie als Energiespeicher für einen Antrieb eines Elektro- oder Hybridfahrzeug treten beim Bremsen und beim Beschleunigen pulsartige Ströme auf, die in eine Auflade- und eine Entladerichtung der Batterie fließen. Dabei treten folglich sowohl pulsartige Lade- als auch pulsartige Entladeströme auf. Pulsartige Ladeströme werden auch als pulsartige Rekuperationsströme bezeichnet. Solche pulsartige Ströme weisen Stromwerte auf, die jeweils etwa zehn Mal größer als ein zeitlicher Mittelwert aller Stromwerte sind, die bei Antrieb eines wie zuvor genannten Fahrzeuges auftreten. Aufgrund der pulsartigen Ströme müssen die eingesetzten Batteriezellen hohe Anforderungen erfüllen. Da die eingesetzten Batteriezellen jeweils einen relativ hohen Innenwiderstand aufweisen, führen solche pulsartige Ströme mit hohen Stromwerten zu einer starken Erhöhung einer Temperatur der Batteriezellen. Deswegen wird je nach Größe der eingesetzten Batterie ein aktives Kühlsystem zur Kühlung der Batteriezellen benötigt.

Die Druckschrift EP 2 193 954 A1 beschreibt eine Schaltung, die eine Batterie umfasst, die mit einer ersten Gleichstromleitung verbunden ist und dazu ausgebildet ist, der ersten Gleichstromleitung elektrische Leistung bereitzustellen. Die Schaltung umfasst ferner einen in Form eines bidirektionalen Abwärts-Aufwärtswandlers ausgebildeten und einen ersten Kondensator umfassenden ersten Gleichspannungswandler, der mit der ersten Gleichstromleitung und mit einer zweiten Gleichstromleitung verbunden ist. Der erste Gleichspannungswandler ist dazu ausgebildet, die elektrische Leistung in eine erste Spannung umzuwandeln und die erste Spannung an die zweite Gleichstromleitung auszugeben. Die Schaltung umfasst ferner einen in Form eines Abwärtswandlers ausgebildeten und einen zweiten Kondensator umfassenden zweiten Gleichspannungswandler, der mit der zweiten Gleichstromleitung und mit einer weiteren Gleichstromleitung verbunden ist. Der zweite Gleichspannungswandler ist dazu ausgebildet, die erste Spannung in eine gegenüber der ersten Spannung unterschiedliche zweite Spannung umzuwandeln und die zweite Spannung der weiteren Gleichstromleitung bereitzustellen. Dabei ist die weitere Gleichstromleitung dazu ausgebildet, eine weitere Spannung einer Last bereitzustellen.

Die Druckschrift US 5,710,699 A beschreibt eine Vorrichtung zum Ausgleichen einer Spitzenlast einer Batterie. Die Vorrichtung umfasst einen Leistungsregler zum Übertragen elektrischer Leistung zwischen einer Last und einer Gleichstromleitung. Die Vorrichtung umfasst ferner eine Batterie, die durch einen ersten Gleichspannungswandler mit der Gleichstromleitung verbunden ist. Die Vorrichtung umfasst ferner einen passiven Energiespeicher, der durch einen zweiten Gleichspannungswandler mit der Gleichstromleitung verbunden ist. Die Batterie ist durch eine unidirektional leitende Einrichtung mit dem passiven Energiespeicher verbunden. Dabei kann die Batterie der Gleichstromleitung elektrische Leistung über beide Gleichspannungswandler bereitstellen, wenn eine von der Batterie bereitgestellte Spannung eine von dem passiven Energiespeicher bereitgestellte Spannung überschreitet. Die Last umfasst einen in einem Rekuperationsmodus betreibbaren Motor. Die Gleichspannungswandler sind so eingestellt, dass während des Rekuperationsmodus die Gleichspannungswandler elektrische Leistung an die Batterie und den passiven Energiespeicher übertragen können.

Die Druckschrift US 2003/0043597 A1 beschreibt einen Abwärts-Aufwärts-Gleichspannungswandler mit einem zusätzlichen Betriebsmodus, in dem keine Übertragung elektrischer Leistung stattfindet.

Der Artikel "A Novel Integrated Magnetic Structure Based DC/DC Converter for Hybrid Battery/Ultracapacitor Energy Storage Systems" von ONAR O. C. et al, in IEEE TRANSACTIONS ON SMART GRID, IEEE, USA, Bd. 3, Nr. 1, März 2012, Seiten 296-307, offenbart einen Leistungspuffer für ein Batteriesystem eines Fahrzeugs.

### Offenbarung der Erfindung

Erfindungsgemäß wird ein Leistungspuffer für ein Batteriesystem zum Betreiben einer elektrischen Maschine angegeben. Dabei umfasst das Batteriesystem eine Batterie mit mehreren Batteriezellen. Der Leistungspuffer umfasst einen ersten Energiespeicher und einen Aufwärtswandler und/oder einen zweiten Energiespeicher und einen Abwärtswandler. Dabei ist der Aufwärtswandler dazu ausgebildet, bei einem Entladen der Batterie elektrische Energie der Batterie dem ersten Energiespeicher zuzuführen. Ferner ist der Abwärtswandler dazu ausgebildet, bei einem Aufladen der Batterie elektrische Energie des zweiten Energiespeichers der Batterie zuzuführen.

Erfindungsgemäß wird ferner ein Verfahren zum Einstellen einer mittels eines Batteriesystems zum Betreiben einer elektrischen Maschine bereitstellbaren elektrischen Leistung angegeben. Dabei umfasst das Batteriesystem eine Batterie mit mehreren Batteriezellen. Bei dem Verfahren erfolgen ein Zuführen von elektrischer Energie der Batterie zu einem ersten Energiespeicher bei einem Entladen der Batterie und/oder ein Zuführen von elektrischer Energie eines zweiten Energiespeichers zu der Batterie bei einem Aufladen der Batterie.

Dabei kann der Aufwärtswandler eingangsseitig mit der Batterie verbunden werden und ist ausgangsseitig mit dem ersten Energiespeicher verbunden. Ferner ist der Aufwärtswandler dazu ausgebildet, bei dem Entladen der Batterie eine jede von der Batterie bereitgestellte erste Spannung in eine erste Ausgangsspannung umzuwandeln und die erste Ausgangsspannung an den ersten Energiespeicher anzulegen.

Weiterhin ist der Abwärtswandler eingangsseitig mit dem zweiten Energiespeicher verbunden und kann ausgangsseitig mit der Batterie verbunden werden. Dabei ist der Abwärtswandler dazu ausgebildet, bei dem Aufladen der Batterie eine jede von dem zweiten Energiespeicher in vorbestimmter Polung bereitgestellte zweite Spannung in eine zweite Ausgangsspannung umzuwandeln und die zweite Ausgangsspannung an die Batterie anzulegen. Dabei stimmt die vorbestimmte Polung mit einer Polung jeder von der Batteriezelle bereitgestellten Spannung überein.

Dabei kann die elektrische Maschine sowohl als Elektromotor als auch als Generator dienen.

Die Unteransprüche zeigen bevorzugte Weiterbildungen der Erfindung.

Bevorzugt erfolgt das Zuführen von elektrischer Energie der Batterie zu dem ersten Energiespeicher bei dem Entladen der Batterie durch ein Aufwärtswandeln. Weiter bevorzugt erfolgt das Zuführen von elektrischer Energie des zweiten Energiespeichers zu der Batterie bei dem Aufladen der Batterie durch ein Abwärtswandeln.

Ein wesentlicher Vorteil der Erfindung ist, dass bei einem erfindungsgemäßen Einsatz einer Batterie als Energiespeicher für einen Antrieb eines Elektro- oder Hybridfahrzeug elektrische Leistung zum Betreiben einer elektrischen Maschine des Elektro- oder Hybridfahrzeuges auch von dem ersten Energiespeicher des erfindungsgemäßen Leistungspuffers bereitgestellt werden kann. Ein weiterer Vorteil der Erfindung ist, dass elektrische Leistung von der elektrischen Maschine auch von dem zweiten Energiespeicher des erfindungsgemäßen Leistungspuffers aufgenommen werden kann. Dadurch werden die Batteriezellen der erfindungsgemäß eingesetzten Batterie nicht mehr mit pulsartigen Strömen mit großen Stromwerten belastet, sondern nur noch von Strömen mit mittleren Stromwerten durchflossen. Folglich wird eine Lebensdauer der Batteriezellen der erfindungsgemäßen Batterie deutlich erhöht. Ferner kann, je nach Größe der erfindungsgemäßen Batterie, auf eine Kühlung ihrer Batteriezellen verzichtet werden.

Bevorzugt ist die erste Ausgangsspannung gleich mit einer maximalen von dem Batteriesystem zu erzeugenden Zwischenkreisspannung. Weiter bevorzugt ist die zweite Ausgangsspannung gleich mit einer Ladeschlussspannung der Batterie.

Bevorzugt umfasst der erste Energiespeicher mindestens einen ersten Kondensator und/oder mindestens eine erste Batteriezelle. Weiter bevorzugt umfasst der zweite Energiespeicher mindestens einen zweiten Kondensator und/oder mindestens eine zweite Batteriezelle.

Um pulsartige Lade- und pulsartige Entladeströme, die bei einem erfindungsgemäßen Einsatz einer Batterie für den Antrieb eines Elektro- oder Hybridfahrzeug beim Bremsen und beim Beschleunigen auftreten, optimal verarbeiten zu können, werden für die Energiespeicher des erfindungsgemäßen Leistungspuffers bevorzugt Energiespeicher mit hoher Leistungsdichte und geringem Innenwiderstand verwendet. Darunter fallen beispielsweise Kondensatoren, insbesondere Superkondensatoren, oder auf Leistung optimierte Lithium-lonen-Batteriezellen.

Bevorzugt kann der Aufwärtswandler ausgangsseitig über ein in einen ersten Schaltzustand versetztes Verbindungselement und einen Inverter an die elektrische Maschine angeschlossen werden. Dabei wird bei angeschlossener elektrischer Maschine das in den ersten Schaltzustand versetzte Verbindungselement bei dem Entladen der Batterie aber nicht bei dem Aufladen der Batterie von Strom durchflossen. Weiter bevorzugt kann der Abwärtswandler eingangsseitig über das in einen zweiten Schaltzustand versetzte Verbindungselement und den Inverter an die elektrische Maschine angeschlossen werden. Dabei wird bei angeschlossener elektrischer Maschine das in den zweiten Schaltzustand versetzte Verbindungselement bei dem Aufladen der Batterie aber nicht bei dem Entladen der Batterie von Strom durchflossen.

Vorteilhaft bei der erfindungsgemäßen Verwendung des Verbindungselements ist, dass das Verbindungselement verhindert, dass der zweite Energiespeicher direkt durch den ersten Energiespeicher aufgeladen wird.

Bevorzugt umfasst das Verbindungselement einen Kippschalter mit zwei Schaltstellungen. Dabei entspricht eine erste Schaltstellung dem ersten Schaltzustand und die zweite Schaltstellung dem zweiten Schalzustand.

Vorzugsweise wird der Kippschalter in Form eines Halbleiterkippschalters mit zwei Schaltstellungen realisiert, der sich durch eine Rückkopplungsschaltung automatisch in die erforderliche Schaltstellung bringt.

Folglich wird bei der Erfindung bevorzugt ein Kippschalter eingesetzt, der eine Aufteilung der pulsartigen Lade- und Entladeströme, die bei dem zuvor beschriebenen erfindungsgemäßen Einsatz der Batterie auftreten, übernimmt. Der so einsetzbare Kippschalter kann alternativ durch zwei entsprechend positionierte und angesteuerte Leistungstransistoren ersetzt werden, die gleichzeitig jeweils auch eine Funktion eines Hauptschützes zur galvanischen Trennung eines erfindungsgemäßen Leistungspuffer und folglich auch einer erfindungsgemäß eingesetzten Batterie von einer entsprechenden elektrischen Maschine übernehmen können.

Vorzugsweise erfolgen bei dem erfindungsgemäßen Verfahren ein Zuführen von elektrischer Energie der Batterie und/oder des ersten Energiespeichers zu der elektrischen Maschine bei dem Entladen der Batterie und/oder ein Zuführen von elektrischer Energie der elektrischen Maschine zu der Batterie und/oder zu dem zweiten Energiespeicher bei dem Aufladen der Batterie.

Bevorzugt umfasst das erfindungsgemäße Verfahren alle funktionellen Merkmale des erfindungsgemäßen Leistungspuffers einzeln oder in Kombination.

Ein weiterer Aspekt der Erfindung betrifft ein Fahrzeug mit einer elektrischen Maschine und einem Batteriesystem zum Betreiben der elektrischen Maschine. Dabei umfasst das Batteriesystem eine Batterie mit mehreren Batteriezellen und einen erfindungsgemäßen Leistungspuffer.

### Kurze Beschreibung der Zeichnung

Nachfolgend werden Ausführungsbeispiele der Erfindung unter Bezugnahme auf die begleitende Zeichnung im Detail beschrieben. Für gleiche Komponenten und Parameter werden jeweils gleiche Bezugszeichen verwendet. In der Zeichnung ist:

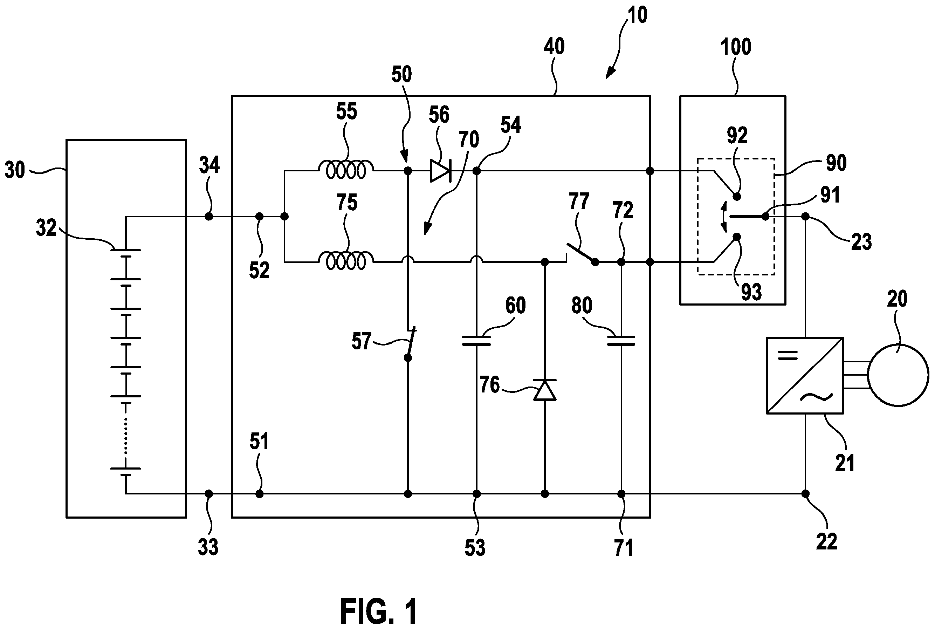

- Figur 1: eine Anordnung mit einem Batteriesystem und einer mittels des Batteriesystems betriebenen elektrischen Maschine, wobei das Batteriesystem eine Batterie und einen gemäß einer ersten Ausführungsform der Erfindung ausgebildeten Leitungspuffer umfasst.

### Ausführungsform der Erfindung

Figur 1 zeigt eine Anordnung 1 mit einem Batteriesystem 10 und einer mittels des Batteriesystems 10 betriebenen elektrischen Maschine 20. Dabei kann die elektrische Maschine 20 sowohl als Elektromotor als auch als Generator dienen.

Das Batteriesystem 10 umfasst eine Batterie 30 mit mehreren Batteriezellen 32 und einen gemäß einer ersten Ausführungsform der Erfindung ausgebildeten Leistungspuffer 40. Zur Vereinfachung der Darstellung ist nur eine einzelne Batteriezelle 32 mit dem entsprechenden Bezugszeichen versehen.

Der Leistungspuffer 40 umfasst einen Aufwärtswandler 50, der einen ersten Eingang 51, einen zweiten Eingang 52, einen ersten Ausgang 53 und einen zweien Ausgang 54 aufweist. Dabei ist ein negativer Pol 33 der Batterie 30 mit dem ersten Eingang 51 des Aufwärtswandlers 50 und ein positiver Pol 34 der Batterie 30 mit dem zweiten Eingang 52 des Aufwärtswandlers 50 verbunden. Der Aufwärtswandler 50 umfasst eine Spule 55, eine Diode 56 und einen ansteuerbaren Schalter 57. Dabei ist die Spule 55 an einem Anschluss ihrer zwei Anschlüsse mit dem positiven Pol 34 der Batterie 30 und an einem weiteren Anschluss ihrer zwei Anschlüsse mit einer Anode der Diode 56 und mit dem Schalter 57 verbunden. Der Schalter 57 ist ferner an einem Anschluss seiner zwei Anschlüsse mit der Spule 55 und der Anode der Diode 56 und an einem weiteren Anschluss seiner zwei Anschlüsse mit dem ersten Eingang 51 des Aufwärtswandlers 50 und mit dem ersten Ausgang 53 des Aufwärtswandlers 50 verbunden. Weiterhin ist der zweite Ausgang 54 des Aufwärtswandlers 50 mit einer Kathode der Diode 56 verbunden. Folglich kann die Diode 56 des Aufwärtswandlers 50 von einem über die Batterie 30 in eine Entladerichtung fließenden Entladestrom aber nicht von einem über die Batterie 30 in eine Laderichtung fließenden Ladestrom durchflossen werden. Der Leistungspuffer 40 umfasst weiterhin einen ersten Energiespeicher 60. Der erste Energiespeicher 60 umfasst beispielsweise mindestens einen ersten Kondensator und/oder mindestens eine erste Batteriezelle. In der Figur 1 ist der erste Energiespeicher 60 als einzelner erster Kondensator dargestellt. Der erste Energiespeicher 60 ist zwischen die zwei Ausgänge 53, 54 des Aufwärtswandlers 50 angeschlossen.

Ferner ist der erste Ausgang 53 des Aufwärtswandlers 50 mit einem ersten Eingang 22 eines Inverters 21 verbunden. Dabei kann der zweite Ausgang 54 des Aufwärtswandlers 50 über einen in eine erste Schaltstellung versetzten Kippschalter 90 mit einem zweiten Eingang 23 des Inverters 21 verbunden werden. Der Kippschalter 90 umfasst einen ersten Anschluss 91, der direkt mit dem zweiten Eingang 23 des Inverters 21 verbunden ist und einen zweiten Anschluss 92, der direkt mit dem zweiten Ausgang 54 des Aufwärtswandlers 50 verbunden ist. Der in die erste Schaltstellung versetzte Kippschalter 90 verbindet den zweiten Ausgang 54 des Aufwärtswandlers 50 mit dem zweiten Eingang 23 des Inverters 21. Dabei kann der in die erste Schaltstellung versetzte Kippschalter 90 von einem über die Batterie 30 in die Entladerichtung fließenden Entladestrom aber nicht von einem über die Batterie 30 in die Laderichtung fließenden Ladestrom durchflossen werden. Ferner ist der Inverter 21 ausgangsseitig mit der elektrischen Maschine 20 verbunden.

Der Leistungspuffer 40 umfasst ferner einen Abwärtswandler 70, der einen ersten Eingang 71, einen zweiten Eingang 72, einen ersten Ausgang 51, der mit dem ersten Eingang 51 des Aufwärtswandlers 50 übereinstimmt, und einen zweiten Ausgang 52, der mit dem zweiten Eingang 52 des Aufwärtswandlers 50 übereinstimmt. Folglich ist der negative Pol 33 der Batterie 30 mit dem ersten Ausgang 51 des Abwärtswandlers 70 und der positive Pol 34 der Batterie 30 mit dem zweiten Ausgang 52 des Abwärtswandlers 70 verbunden. Weiterhin umfasst der Abwärtswandler 70 eine weitere Spule 75, eine weitere Diode 76 und einen weiteren ansteuerbaren Schalter 77. Dabei ist die weitere Spule 75 an einem Anschluss ihrer zwei Anschlüsse mit dem zweiten Ausgang 52 des Abwärtswandlers 70 und an einem weiteren Anschluss ihrer zwei Anschlüsse mit einer Kathode der weiteren Diode 76 und mit dem weiteren Schalter 77 verbunden. Der weitere Schalter 77 ist ferner an einem Anschluss seiner zwei Anschlüsse mit der weiteren Spule 75 und der Kathode der weiteren Diode 76 und an einem weiteren Anschluss seiner zwei Anschlüsse mit dem zweiten Eingang 72 des Abwärtswandlers 70 verbunden. Weiterhin ist der erste Eingang 71 des Abwärtswandlers 70 und der erste Ausgang 51 des Abwärtswandlers 70 mit einer Anode der weiteren Diode 76 verbunden. Folglich kann die weitere Diode 76 des Abwärtswandlers 70 von einem über die Batterie 30 in die Laderichtung fließenden Ladestrom aber nicht von einem über die Batterie 30 in die Entladerichtung fließenden Entladestrom durchflossen werden. Der Leistungspuffer 40 umfasst weiterhin einen zweiten Energiespeicher 80. Der zweite Energiespeicher 80 umfasst beispielsweise mindestens einen zweiten Kondensator und/oder mindestens eine zweite Batteriezelle. In der Figur 1 ist der zweite Energiespeicher 80 als einzelner zweiter Kondensator dargestellt. Der zweite Energiespeicher 80 ist zwischen die zwei Eingänge 71, 72 des Abwärtswandler 70 angeschlossen.

Ferner ist der erste Eingang 71 des Abwärtswandlers 70 mit dem ersten Eingang 22 des Inverters 21 verbunden. Dabei kann der zweite Eingang 72 des Abwärtswandlers 70 über den in eine zweite Schaltstellung versetzten Kippschalter 90 mit einem zweiten Eingang 23 des Inverters 21 verbunden werden. Der Kippschalter 90 umfasst einen dritten Anschluss 93, der direkt mit dem zweiten Eingang 72 des Abwärtswandlers 70 verbunden ist. Der in die zweite Schaltstellung versetzte Kippschalter 90 verbindet den zweiten Eingang 72 des Abwärtswandlers 70 mit dem zweiten Eingang 23 des Inverters 21. Dabei kann der in die zweite Schaltstellung versetzte Kippschalter 90 von einem über die Batterie 30 in die Laderichtung fließenden Ladestrom aber nicht von einem über die Batterie 30 in die Entladerichtung fließenden Entladestrom durchflossen werden.

Bei dem in der Figur 1 dargestellten Batteriesystem 10 weisen der negative Pol 33 der Batterie 30, der erste Eingang 51 des Aufwärtswandlers 50 und folglich auch der erste Ausgang 51 des Abwärtswandlers 70, der weitere Anschluss des Schalters 57 des Aufwärtswandlers 50, die Anode der weiteren Diode 76 des Abwärtswandlers 70, der erste Ausgang 53 des Aufwärtswandlers 50, der erste Eingang 71 des Abwärtswandlers 70 und bei angeschlossenem Inverter 21 auch der erste Eingang 22 des Inverters 21 ein und dasselbe Bezugspotential auf.

Zum Regeln des Aufwärtswandlers 50 wird der Schalter 57 derartig angesteuert, dass bei einem Entladen der Batterie 30 eine jede von der Batterie 30 bereitgestellte erste Spannung in eine erste Ausgangsspannung, die gleich mit einer maximalen von dem Batteriesystem 10 zu erzeugenden Zwischenkreisspannung ist, umgewandelt wird. Dabei wird die erste Ausgangsspannung an den ersten Energiespeicher 60 angelegt. Folglich versorgt der so geregelte Aufwärtswandler 50 den ersten Energiespeicher 60 derart mit elektrischer Energie, dass der erste Energiespeicher 60 ständig voll aufgeladen ist. Dadurch stellt die Batterie 30 unabhängig von ihrem Ladezustand eine maximale elektrische Leistung dem ersten Energiespeicher 60 zur Verfügung. Eine Ansteuerung des Schalters 57 des Aufwärtswandlers 50 wird in der Figur 1 nicht explizit gezeigt. Wird von der hier als Elektromotor dienenden elektrischen Maschine 20 ein pulsartiger Entladestrom mit hohem Stromwert benötigt, so wird eine dabei benötigte elektrische Energie dem ersten Energiespeicher 60 entnommen. Nachdem der pulsartige Entladestrom nicht mehr benötigt wird, wird der erste Energiespeicher 60 von der Batterie 30 über den Aufwärtswandler 50 mit einem Entladestrom mit kleinem Stromwert langsam nachgeladen.

Zum Regeln des Abwärtswandlers 70 wird der weitere Schalter 77 derartig angesteuert, dass bei einem Aufladen der Batterie 30 eine jede von dem zweiten Energiespeicher 80 in vorbestimmter Polung bereitgestellte zweite Spannung in eine zweite Ausgangsspannung, die gleich mit einer Ladeschlussspannung der Batterie 30 ist, umgewandelt wird. Dabei stimmt die vorbestimmte Polung mit einer Polung jeder von der Batterie 30 bereitgestellten ersten Spannung überein. Auch wird die zweite Ausgangsspannung an die Batterie 30 angelegt. Folglich wird durch den so geregelte Abwärtswandler 70 der zweite Energiespeicher 80 ständig entladen und dadurch die Batterie 30 ständig aufgeladen. Folglich steht der zweite Energiespeicher 80 unabhängig von dem Ladezustand der Batterie 30 für pulsartige Rekuperationsströme zur Verfügung, die über die elektrische Maschine 20 und gegebenenfalls auch über die Batterie 30 in die Laderichtung fließen. Eine Ansteuerung des weiteren Schalters 77 des Abwärtswandler 70 wird in der Figur 1 auch nicht explizit gezeigt. Wird von der hier als Generator dienenden elekrischen Maschine 20 ein pulsartiger Rekuperationsstrom mit hohem Stromwert erzeugt, so wird eine dabei entstandene elektrische Energie dem zweiten Energiespeicher 80 zugeführt. Da die so resultierende, von dem zweiten Energiespeicher 80 bereitstellbare zweite Spannung oberhalb jeder von der Batterie 30 bereitstellbaren ersten Spannung liegt, wird die Batterie 30, nachdem der pulsartige Rekuperationsstrom nicht mehr erzeugt wird, von dem zweiten Energiespeicher 80 über den Abwärtswandler 70 mit einem Ladestrom mit kleinem Stromwert langsam nachgeladen.

Bei der Erfindung wird durch eine Verwendung der ersten Diode 58 und der zweiten Diode 78 eine Aufteilung von in unterschiedlichen Richtungen fließenden Strömen ermöglicht.

Alternativ kann der Kippschalter 90 durch einen ersten Leistungstransistor und einen zweiten Leistungstransistor ersetzt werden, die derartig angeordnet und angesteuert werden, dass die Leistungstransistoren eine Funktionalität des Kippschalters 90 erfüllen. Voreilhaft dabei ist, dass die zwei Leistungstransistoren auch eine galvanische Trennung des erfindungsgemäßen Leistungspuffers 40 von der elektrischen Maschine 20 und so von einem restlichen Antriebsstrang, in dem die elektrische Maschine 20 angeordnet ist, ermöglichen. So kann ein zur galvanischen Trennung des positiven Pols 34 der Batterie 30 von der elektrischen Maschine 20 einzusetzendes Hauptschütz entfallen. Der Kippschalter 90 beziehungsweise der erste Leistungstransistor und der zweite Leistungstransistor, können als Teil einer Batteriesteuereinheit 100 ausgebildet sein.

Wird die elektrische Maschine 20 für den Antrieb eines Elektro- oder Hybridfahrzeuges eingesetzt, so hängt eine Dimensionierung des Leistungspuffers 40 von durch ein solches Fahrzeug angeforderten Leistungsprofilen sowie von einer Stromfähigkeit der in Reihe verbundenen Batteriezellen 32 der Batterie 30 ab. Beispielsweise kann ein solches Fahrzeug ein Leistungsprofil, bei dem eine Leistung von 80 kW bis 100 kW für eine Zeit von 2 s bis 5 s benötigt wird, anfordern. Je nach Dimensionierung des Leistungspuffers 40 kann gegebenenfalls auf eine aktive Kühlung der Batteriezellen 32 der Batterie 30 verzichtet werden.

Neben der voranstehenden schriftlichen Offenbarung wird hiermit zur weiteren Offenbarung der Erfindung ergänzend auf die Darstellung in der Figur 1 verwiesen.

## Patentansprüche

1. Leistungspuffer (40) und Verbindungselement für ein Batteriesystem (10) eines Fahrzeugs zum Betreiben einer elektrischen Maschine (20),
wobei das Batteriesystem (10) eine Batterie (30) mit mehreren Batteriezellen (32) umfasst,
wobei der Leistungspuffer (40) einen ersten Energiespeicher (60) und einen Aufwärtswandler (50) umfasst, der dazu ausgebildet ist, bei einem Entladen der Batterie (30) elektrische Energie der Batterie (30) dem ersten Energiespeicher (60) zuzuführen, und
der Leistungspuffer (40) weiterhin einen zweiten Energiespeicher (80) und einen Abwärtswandler (70) umfasst, der dazu ausgebildet ist, bei einem Aufladen der Batterie (30) elektrische Energie des zweiten Energiespeichers (80) der Batterie (30) zuzuführen,
wobei der Aufwärtswandler (50) eingangsseitig über einen Eingang (52) des Aufwärtswandlers (50) mit einem Anschluss (34) der Batterie (30) verbunden werden kann und ausgangsseitig über einen Ausgang (54) des Aufwärtswandlers (50) mit dem ersten Energiespeicher (60) verbunden ist,
wobei der Aufwärtswandler (50) dazu ausgebildet ist, bei dem Entladen der Batterie (30) eine von der Batterie (30) bereitgestellte erste Spannung in eine erste Ausgangsspannung umzuwandeln und die erste Ausgangsspannung an den ersten Energiespeicher (60) anzulegen,
wobei der Abwärtswandler (70) eingangsseitig über einen Eingang (72) des Abwärtswandlers (70) mit dem zweiten Energiespeicher (80) verbunden ist und ausgangsseitig über einen Ausgang (52) mit dem Anschluss (34) der Batterie (30) verbunden werden kann, wobei der Ausgang (52) des Abwärtswandlers (50) mit dem Eingang (52) des Aufwärtswandlers (50) elektrisch verbunden ist, und
dazu ausgebildet ist, bei dem Aufladen der Batterie (30) eine von dem zweiten Energiespeicher (80) bereitgestellte zweite Spannung in eine zweite Ausgangsspannung umzuwandeln und die zweite Ausgangsspannung an die Batterie (30) anzulegen,
**dadurch gekennzeichnet, dass**
ein erster Anschluss (91) des Verbindungselements mit einem Anschluss (23) eines an die elektrische Maschine (20) angeschlossenen Inverters (21), ein zweiter Anschluss (92) des Verbindungselements mit dem Ausgang (54) des Aufwärtswandlers (50) und ein dritter Anschluss (93) des Verbindungselements mit dem Eingang (72) des Abwärtswandlers (70) elektrisch verbunden ist,
wobei über das in den ersten Schaltzustand versetzte Verbindungselement des Batteriesystems (10) der Ausgang (54) des Aufwärtswandlers (50) mittels dem zweiten Anschluss (92) des Verbindungselements mit dem Anschluss (23) des Inverters (21) elektrisch verbunden werden kann,
wodurch bei angeschlossener elektrischer Maschine (20) das in den ersten Schaltzustand versetzte Verbindungselement bei dem Entladen der Batterie (30) aber nicht bei dem Aufladen der Batterie (30) von Strom durchflossen wird, um pulsartige Entladeströme für die Batterie (30) optimal verarbeiten zu können und wobei über das in einen zweiten Schaltzustand versetzte Verbindungselement des Batteriesystems (10) der zweite Eingang (72) des Abwärtswandlers (70) mittels dem dritten Anschluss (93) des Verbindungselements mit dem Anschluss (23) des Inverters (21) elektrisch verbunden werden kann,
wodurch bei angeschlossener elektrischer Maschine (20) das in den zweiten Schaltzustand versetzte Verbindungselement bei dem Aufladen der Batterie (30) aber nicht bei dem Entladen der Batterie (30) von Strom durchflossen wird, um pulsartige Ladeströme für die Batterie (30) optimal verarbeiten zu können.

2. Leitungspuffer (40) nach Anspruch 1, **dadurch gekennzeichnet, dass** der erste Energiespeicher (60) mindestens einen ersten Kondensator und/oder mindestens eine erste Batteriezelle umfasst und/oder wobei der zweite Energiespeicher (80) mindestens einen zweiten Kondensator und/oder mindestens eine zweite Batteriezelle umfasst, wobei die erste Batteriezelle und die zweite Batteriezelle eine hohe Leistungsdichte und geringen Innenwiderstand aufweisen.

3. Leistungspuffer (40) nach einem der vorhergehenden Ansprüche, wobei das Verbindungselement einen Kippschalter (90) mit zwei Schaltstellungen umfasst, wobei eine erste Schaltstellung dem ersten Schaltzustand entspricht und eine zweite Schaltstellung dem zweiten Schaltzustand entspricht.

4. Batteriesystem (10) mit einer Batterie (30) sowie einem Leistungspuffer (40) und Verbindungselement gemäß einem der Ansprüche 1 bis 3.

5. Fahrzeug mit einem Batteriesystem (10) nach Anspruch 4.

6. Verfahren zum Einstellen einer mittels eines Batteriesystems (10) eines Fahrzeugs zum Betreiben einer elektrischen Maschine (20) bereitstellbaren elektrischen Leistung, wobei das Batteriesystem (10) eine Batterie (30) mit mehreren Batteriezellen (32) sowie einen Leistungspuffer (40) und ein Verbindungselement gemäß einem der Ansprüche 1 bis 3 umfasst, umfassend die Schritte:
Zuführen von elektrischer Energie der Batterie (30) zu einem ersten Energiespeicher (60) bei einem Entladen der Batterie (30) durch Aufwärtswandeln einer jeden von der Batterie (30) bereitgestellten ersten Spannung in eine erste Ausgangsspannung bei dem Entladen der Batterie (30) und Anlegen der ersten Ausgangsspannung an den ersten Energiespeicher (60) bei dem Entladen der Batterie (30) und
Zuführen von elektrischer Energie der Batterie (30) und/oder des ersten Energiespeichers (60) zu der elektrischen Maschine (20) bei dem Entladen der Batterie (30) mittels dem in einen ersten Schaltzustand versetzten Verbindungselement des Batteriesystems (10), wobei der Ausgang (54) des Aufwärtswandlers (50) mittels eines zweiten Anschlusses (92) des Verbindungselements mit einem Anschluss (23) eines zwischen dem Verbindungselement und der elektrischen Maschine (20) angeordneten Inverters (21) elektrisch verbunden werden kann,
Zuführen von elektrischer Energie eines zweiten Energiespeichers (80) zu der Batterie (30) bei einem Aufladen der Batterie (30), Abwärtswandeln einer jeden von dem zweiten Energiespeicher (80) in vorbestimmter Polung bereitgestellten zweiten Spannung in eine zweite Ausgangsspannung bei dem Aufladen der Batterie (30) und Anlegen der zweiten Ausgangsspannung an die Batterie (30) bei dem Aufladen der Batterie (30), wobei die vorbestimmte Polung mit einer Polung jeder von der Batterie (30) bereitgestellten ersten Spannung übereinstimmt und
Zuführen von elektrischer Energie der elektrischen Maschine (20) zu der Batterie (30) und/oder zu dem zweiten Energiespeicher (80) bei dem Aufladen der Batterie (30) mittels dem in einen zweiten Schaltzustand versetzten Verbindungselement des Batteriesystems (10), wobei ein Eingang (72) des Abwärtswandlers (70) mittels eines dritten Anschlusses (93) des Verbindungselements mit dem Anschluss (23) des Inverters (21) elektrisch verbunden werden kann.

## Claims

1. Power buffer (40) and connection element for a battery system (10) of a vehicle for operating an electrical machine (20),
wherein the battery system (10) comprises a battery (30) having a plurality of battery cells (32), wherein the power buffer (40) comprises a first energy store (60) and a step-up converter (50) configured to feed electrical energy of the battery (30) to the first energy store (60) during discharging of the battery (30), and
the power buffer (40) furthermore comprises a second energy store (80) and a step-down converter (70) configured to feed electrical energy of the second energy store (80) to the battery (30) during charging of the battery (30),
wherein the step-up converter (50) can be connected to a terminal (34) of the battery (30) on the input side via an input (52) of the step-up converter (50) and is connected to the first energy store (60) on the output side via an output (54) of the step-up converter (50),
wherein the step-up converter (50) is configured, during discharging of the battery (30), to convert a first voltage provided by the battery (30) into a first output voltage and to apply the first output voltage to the first energy store (60),
wherein the step-down converter (70) is connected to the second energy store (80) on the input side via an input (72) of the step-down converter (70) and can be connected to the terminal (34) of the battery (30) on the output side via an output (52), wherein the output (52) of the step-down converter (70) is electrically connected to the input (52) of the step-up converter (50), and is configured, during charging of the battery (30), to convert a second voltage provided by the second energy store (80) into a second output voltage and to apply the second output voltage to the battery (30),
**characterized in that**
a first terminal (91) of the connection element is electrically connected to a terminal (23) of an inverter (21) connected to the electrical machine (20), a second terminal (92) of the connection element is electrically connected to the output (54) of the step-up converter (50) and a third terminal (93) of the connection element is electrically connected to the input (72) of the step-down converter (70),
wherein, via the connection element of the battery system (10) put into the first switching state, the output (54) of the step-up converter (50) can be electrically connected to the terminal (23) of the inverter (21) by means of the second terminal (92) of the connection element,
as a result of which, with the electrical machine (20) connected, current flows through the connection element put into the first switching state during discharging of the battery (30), but not during charging of the battery (30), in order to be able to optimally process pulsed discharge currents for the battery (30), and
wherein, via the connection element of the battery system (10) put into a second switching state, the second input (72) of the step-down converter (70) can be electrically connected to the terminal (23) of the inverter (21) by means of the third terminal (93) of the connection element,
as a result of which, with the electrical machine (20) connected, current flows through the connection element put into the second switching state during charging of the battery (30), but not during discharging of the battery (30), in order to be able to optimally process pulsed charging currents for the battery (30).

2. Power buffer (40) according to Claim 1, **characterized in that** the first energy store (60) comprises at least one first capacitor and/or at least one battery cell and/or wherein the second energy store (80) comprises at least one second capacitor and/or at least one second battery cell, wherein the first battery cell and the second battery cell have a high power density and low internal resistance.

3. Power buffer (40) according to either of the preceding claims, wherein the connection element comprises a toggle switch (90) having two switching positions, wherein a first switching position corresponds to the first switching state and a second switching position corresponds to the second switching state.

4. Battery system (10) comprising a battery (30) and also a power buffer (40) and connection element according to any of Claims 1 to 3.

5. Vehicle comprising a battery system (10) according to Claim 4.

6. Method for adjusting an electrical power that is able to be provided by means of a battery system (10) of a vehicle for operating an electrical machine (20), wherein the battery system (10) comprises a battery (30) having a plurality of battery cells (32) and also a power buffer (40) and a connection element according to any of Claims 1 to 3, comprising the following steps:
feeding electrical energy of the battery (30) to a first energy store (60) during discharging of the battery (30) by step-up converting each first voltage provided by the battery (30) into a first output voltage during discharging of the battery (30) and applying the first output voltage to the first energy store (60) during discharging of the battery (30), and
feeding electrical energy of the battery (30) and/or of the first energy store (60) to the electrical machine (20) during discharging of the battery (30) by means of the connection element of the battery system (10) put into a first switching state, wherein the output (54) of the step-up converter (50) can be electrically connected, by means of a second terminal (92) of the connection element, to a terminal (23) of an inverter (21) arranged between the connection element and the electrical machine (20),
feeding electrical energy of a second energy store (80) to the battery (30) during charging of the battery (30), step-down converting each second voltage provided by the second energy store (80) with predetermined polarity into a second output voltage during charging of the battery (30) and applying the second output voltage to the battery (30) during charging of the battery (30), wherein the predetermined polarity corresponds to a polarity of each first voltage provided by the battery (30), and
feeding electrical energy of the electrical machine (20) to the battery (30) and/or to the second energy store (80) during charging of the battery (30) by means of the connection element of the battery system (10) put into a second switching state, wherein an input (72) of the step-down converter (70) can be electrically connected to the terminal (23) of the inverter (21) by means of a third terminal (93) of the connection element.

## Revendications

1. Tampon de puissance (40) et élément de connexion pour un système de batterie (10) d'un véhicule destiné à faire fonctionner une machine électrique (20),
le système de batterie (10) comportant une batterie (30) pourvue de plusieurs cellules de batterie (32),
le tampon de puissance (40) comportant un premier accumulateur d'énergie (60) et un convertisseur élévateur (50), lequel est configuré pour, lors d'une décharge de la batterie (30), acheminer de l'énergie électrique de la batterie (30) au premier accumulateur d'énergie (60), et
le tampon de puissance (40) comportant en outre un deuxième accumulateur d'énergie (80) et un convertisseur abaisseur (70), lequel est configuré pour, lors d'une charge de la batterie (30), acheminer de l'énergie électrique du deuxième accumulateur d'énergie (80) à la batterie (30),
le convertisseur élévateur (50) pouvant être relié du côté de l'entrée, par le biais d'une entrée (52) du convertisseur élévateur (50), à une borne (34) de la batterie (30) et étant relié du côté de la sortie, par le biais d'une sortie (54) du convertisseur élévateur (50), au premier accumulateur d'énergie (60),
le convertisseur élévateur (50) étant configuré pour, lors de la décharge de la batterie (30), convertir une première tension fournie par la batterie (30) en une première tension de sortie et appliquer la première tension de sortie au premier accumulateur d'énergie (60), le convertisseur abaisseur (70) étant relié du côté de l'entrée, par le biais d'une entrée (72) du convertisseur abaisseur (70), au deuxième accumulateur d'énergie (80) et pouvant être relié du côté de la sortie, par le biais d'une sortie (52), à la borne (34) de la batterie (30), la sortie (52) du convertisseur abaisseur (70) étant reliée électriquement à l'entrée (52) du convertisseur élévateur (50), et étant configuré pour, lors de la charge de la batterie (30), convertir une deuxième tension fournie par le deuxième accumulateur d'énergie (80) en une deuxième tension de sortie et appliquer la deuxième tension de sortie à la batterie (30), **caractérisé en ce que**
une première borne (91) de l'élément de connexion est reliée électriquement à une borne (23) d'un onduleur (21) raccordé à la machine électrique (20), une deuxième borne (92) de l'élément de connexion est reliée électriquement à la sortie (54) du convertisseur élévateur (50) et une troisième borne (93) de l'élément de connexion est reliée électriquement à l'entrée (72) du convertisseur abaisseur (70),
la sortie (54) du convertisseur élévateur (50) pouvant être reliée électriquement à la borne (23) de l'onduleur (21) au moyen de la deuxième borne (92) de l'élément de connexion par le biais de l'élément de connexion du système de batterie (10) amené dans le premier état de commutation,
lorsque la machine électrique (20) est raccordée, l'élément de connexion amené dans le premier état de commutation étant traversé par un courant lors de la décharge de la batterie (30), mais non lors de la charge de la batterie (30), afin de pouvoir traiter de manière optimale les courants de décharge impulsionnels pour la batterie (30) et la deuxième entrée (72) du convertisseur abaisseur (70) pouvant être reliée électriquement à la borne (23) de l'onduleur (21) au moyen de la troisième borne (93) de l'élément de connexion par le biais de l'élément de connexion du système de batterie (10) amené dans un deuxième état de commutation,
moyennant quoi, lorsque la machine électrique (20) est raccordée, l'élément de connexion amené dans le deuxième état de commutation est traversé par un courant lors de la charge de la batterie (30), mais non lors de la décharge de la batterie (30), afin de pouvoir traiter de manière optimale les courants de charge impulsionnels pour la batterie (30).

2. Tampon de puissance (40) selon la revendication 1, **caractérisé en ce que** le premier accumulateur d'énergie (60) comporte au moins un premier condensateur et/ou au moins une première cellule de batterie et/ou le deuxième accumulateur d'énergie (80) comporte au moins un deuxième condensateur et/ou au moins une deuxième cellule de batterie, la première cellule de batterie et la deuxième cellule de batterie possédant une densité de puissance élevée et une faible résistance interne.

3. Tampon de puissance (40) selon l'une des revendications précédentes, l'élément de connexion comportant un commutateur à bascule (90) avec trois positions de commutation, une première position de commutation correspondant au premier état de commutation et une deuxième position de commutation correspondant au deuxième état de commutation.

4. Système de batterie (10) comprenant une batterie (30) ainsi qu'un tampon de puissance (40) et un élément de connexion selon l'une des revendications 1 à 3.

5. Véhicule équipé d'un système de batterie (10) selon la revendication 4.

6. Procédé pour régler une puissance électrique pouvant être fournie par un système de batterie (10) d'un véhicule destiné à faire fonctionner une machine électrique (20), le système de batterie (10) comportant une batterie (30) pourvue de plusieurs cellules de batterie (32) ainsi qu'un tampon de puissance (40) et un élément de connexion selon l'une des revendications 1 à 3, comprenant les étapes suivantes :
acheminement d'énergie électrique de la batterie (30) à un premier accumulateur d'énergie (60) lors d'une décharge de la batterie (30) par conversion élévation de toute première tension fournie par la batterie (30) en une première tension de sortie lors de la décharge de la batterie (30) et application de la première tension de sortie au premier accumulateur d'énergie (60) lors de la décharge de la batterie (30) et
acheminement d'énergie électrique de la batterie (30) et/ou du premier accumulateur d'énergie (60) à la machine électrique (20) lors de la décharge de la batterie (30) au moyen de l'élément de connexion du système de batterie (10) amené dans un premier état de commutation, la sortie (54) du convertisseur élévateur (50) pouvant être reliée électriquement à une borne (23) d'un l'onduleur (21), disposé entre l'élément de connexion et la machine électrique (20), au moyen d'une deuxième borne (92) de l'élément de connexion,
acheminement d'énergie électrique d'un deuxième accumulateur d'énergie (80) à la batterie (30) lors d'une charge de la batterie (30), conversion abaissement de toute deuxième tension, fournie par le deuxième accumulateur d'énergie (80) dans une polarité prédéterminée, en une deuxième tension de sortie lors de la charge de la batterie (30) et application de la deuxième tension de sortie à la batterie (30) lors de la charge de la batterie (30), la polarité prédéterminée coïncidant avec une polarité de toute première tension fournie par la batterie (30) et
acheminement d'énergie électrique de la machine électrique (20) à la batterie (30) et/ou au deuxième accumulateur d'énergie (80) lors de la charge de la batterie (30) au moyen de l'élément de connexion du système de batterie (10) amené dans un deuxième état de commutation, une entrée (72) du convertisseur abaisseur (70) pouvant être reliée électriquement à la borne (23) de l'onduleur (21) au moyen d'une troisième borne (93) de l'élément de connexion.
